# FASCICULE DE BREVET EUROPEEN

(11) **EP 1 744 913 B1**
(45) Date de publication et mention de la délivrance du brevet: **29.09.2010**
(21) Numéro de dépôt: 05735114.0
(22) Date de dépôt: 28.04.2005
(51) Int. Cl.: B60C 23/04

(54) **PROCEDE PERFECTIONNE DE SURVEILLANCE D'UN PNEUMATIQUE, PNEUMATIQUE POUR SA MISE EN OEUVRE, ET APPLICATION**
VERBESSERTES VERFAHREN ZUR ÜBERWACHUNG EINES REIFENS, DAFÜR GEEIGNETER REIFEN UND VERWENDUNG DAFÜR
IMPROVED METHOD FOR MONITORING A TYRE, TYRE THEREFOR, AND USE THEREOF

(30) Priorité: 04.05.2004 FR 0404862
(43) Date de publication de la demande: 24.01.2007
(73) Titulaire: Société de Technologie Michelin, 63000 Clermont-Ferrand (FR); Michelin Recherche et Technique S.A., 1763 Granges-Paccot (CH)
(72) Inventeur: PIMORT, Bertrand, F-63190 Moissat (FR)
(74) Mandataire: Bauvir, Jacques
(86) Numéro de dépôt international: PCT/EP2005/004567
(87) Numéro de publication internationale: WO 2005/105481

(56) Documents cités:
- DE-A- 19 522 269

## Description

L'invention concerne, de façon générale, la sécurité des véhicules terrestres, et notamment des véhicules automobiles.

Plus précisément, l'invention concerne, selon un premier de ses aspects, un procédé de surveillance d'un pneumatique équipant un véhicule terrestre doté d'une unité centrale de contrôle, ce procédé comprenant une étape préliminaire consistant au moins à implanter dans un flanc du pneumatique une puce électronique dans laquelle est au moins mémorisé un code d'identification du pneu, et à équiper cette puce et l'unité centrale de circuits de communication respectivement périphérique et central reliés l'un à l'autre à travers une voie de transmission de données exempte de contact physique, et une étape fonctionnelle comprenant au moins une opération de suivi consistant à constituer et / ou à mettre à jour un historique d'utilisation du pneu en mémorisant des valeurs actualisées centralisées par l'unité centrale et représentatives d'au moins un paramètre évolutif d'utilisation de ce pneu, tel que son kilométrage ou sa plus grande vitesse de roulage.

Un procédé de ce type est déjà mis en oeuvre sur des véhicules automobiles existants et renforce de façon considérable la sécurité de ces derniers par le suivi constant qu'il assure des conditions d'utilisation des pneumatiques de ces véhicules, voit par exemple l'exposé du document DE 195 222 69 A1 qui montre le préambule de la revendication 1.

Néanmoins, ce suivi ne peut aujourd'hui être assuré de façon complète qu'à la condition que les pneumatiques équipant le véhicule ne soient pas remplacés ni changés de place sur le véhicule, que ce soit par changement de roue ou par rotation d'un demi-tour autour d'un axe vertical.

En effet, le suivi de l'utilisation des pneumatiques, dans sa forme connue, est perturbé dès lors que le véhicule, à la suite d'une crevaison, roule avec une roue de secours jusqu'à réparation du pneu crevé, ou que les pneumatiques adaptés à des conditions climatiques tempérées sont remplacés par des pneus neige ou inversement, ou que les pneumatiques sont retournés ou déplacés pour assurer la symétrie de leur usure, ou encore que les pneumatiques usagés sont remplacés par des pneumatiques neufs.

L'invention, qui se situe dans ce contexte, a pour but de proposer un procédé permettant de résoudre l'un au moins de ces problèmes.

A cette fin, le procédé de l'invention, par ailleurs conforme à la définition générique qu'en donne le préambule ci-dessus, est essentiellement caractérisé en ce que l'étape préliminaire consiste au moins à implanter dans des premier et second flancs du pneumatique des première et seconde puces électroniques dont l'une seulement est opérationnelle en fonctionnement, dans chacune desquelles est mémorisé le même code d'identification du pneu, et dans lesquelles sont respectivement mémorisés des codes respectifs différents d'implantation de ces puces dans le pneu, ces première et seconde puces étant respectivement dotées de premier et second circuits de communication périphériques dont seul le circuit de communication de la puce opérationnelle est utilisable en fonctionnement pour communiquer avec le circuit de communication central, et en ce que l'étape fonctionnelle comprend des opérations centralisée et décentralisée de suivi consistant respectivement à constituer et / ou à mettre à jour, dans l'unité centrale et dans la puce opérationnelle, des historiques centralisé et décentralisé actifs simultanément dédiés au pneu identifié par le code d'identification mémorisé dans la puce opérationnelle, et à une situation de montage du pneu identifiée par le code d'implantation mémorisé dans cette puce opérationnelle.

De préférence, l'étape fonctionnelle comporte, avant la mise en oeuvre des opérations centralisée et décentralisée de suivi, une première opération de vérification produisant un premier résultat de décision si l'historique centralisé actif est dédié au pneu identifié par le code d'identification mémorisé dans la puce opérationnelle, et un deuxième résultat de décision dans le cas contraire.

De façon avantageuse, l'étape fonctionnelle comporte également une opération de recherche conditionnellement mise en oeuvre à la production du deuxième résultat de décision, consistant à rechercher dans l'unité centrale un éventuel historique centralisé non actif préalablement mémorisé et dédié au pneu identifié par le code d'identification mémorisé dans la puce opérationnelle, à produire, en cas de recherche fructueuse, un troisième résultat de décision consistant au moins à rendre actif cet historique centralisé mémorisé, et à produire un quatrième résultat de décision en cas de recherche infructueuse.

L'étape fonctionnelle peut aussi comporter, avant la mise en oeuvre des opérations centralisée et décentralisée de suivi, une deuxième opération de vérification produisant un cinquième résultat de décision si l'historique centralisé actif est dédié au pneu identifié par le code d'identification mémorisé dans la puce opérationnelle sans être dédié à la situation de montage identifiée par le code d'implantation mémorisé dans cette puce opérationnelle.

Dans ce cas, il est utile de prévoir que l'étape fonctionnelle comporte une opération de mise à niveau conditionnellement mise en oeuvre à la production du cinquième résultat de décision et au cours de laquelle tout enregistrement éventuellement manquant dans l'historique décentralisé actif et disponible dans l'historique centralisé actif dédié au même pneu est recopié de cet historique centralisé actif vers l'historique décentralisé actif.

Dans le cas où la procédé de surveillance produit un quatrième résultat de décision, l'opération centralisée de suivi qui fait suite à la production de ce quatrième résultat de décision comprend par exemple la création d'un nouvel historique centralisé actif dédié au pneu identifié par le code d'identification de pneu mémorisé dans la puce opérationnelle, et à la situation de montage identifiée par le code d'implantation mémorisé dans cette puce opérationnelle, et tout enregistrement éventuellement manquant dans l'historique centralisé actif nouvellement créé et disponible dans l'historique décentralisé actif est recopié de cet historique décentralisé vers l'historique centralisé actif nouvellement créé.

En pratique, chaque opération de vérification est avantageusement effectuée au moins à chaque démarrage du véhicule.

Le procédé de l'invention présente notamment le plus grand intérêt lorsqu'il est appliqué au suivi des conditions de roulage d'un pneumatique utilisé en mode dégradé, par exemple d'un pneumatique sous-gonflé ou même totalement dégonflé.

L'invention concerne également un pneumatique pour la mise en oeuvre du procédé de surveillance tel que précédemment défini, ce pneumatique étant caractérisé en ce qu'il comprend au moins des première et seconde puces électroniques respectivement implantées dans les premier et second flancs de ce pneu.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue schématique d'un véhicule mettant en oeuvre le procédé de l'invention;
- la figure 2 est une représentation schématique d'une puce électronique et de son circuit de communication, tels qu'utilisés selon le procédé de l'invention; et
- la figure 3 est un diagramme opérationnel illustrant la mise en oeuvre du procédé de l'invention.

Comme annoncé précédemment, l'invention concerne un procédé qui permet de surveiller un pneumatique, et en pratique chacun des pneumatiques 11 à 14, d'un véhicule terrestre VH doté d'une unité centrale de contrôle UC.

L'invention est donc notamment applicable aux véhicules automobiles de conception récente, qui sont tous équipés d'une telle unité de contrôle UC.

De façon connue en soi, l'unité centrale UC est équipée, pour chacun des pneumatiques 11 à 14, d'un circuit de communication central tel que 41 à 44.

Chacun des pneumatiques 11 à 14 porte une puce électronique correspondante, 21g à 24g, implantée dans un flanc de ce pneu, et dans laquelle est mémorisé un code d'identification du pneu, tel que K11 à K14.

Par ailleurs, chaque puce telle que 21g à 24g est dotée d'un circuit de communication périphérique tel que 31g à 34g, chacun de ces circuits de communication périphériques étant relié au circuit de communication central correspondant, tel que 41 à 44, à travers une voie de transmission de données exempte de contact physique.

En pratique, chaque puce et le circuit de communication périphérique associé sont constitués par une étiquette électronique, la transmission de données étant réalisée par liaison radio.

Les étiquettes électroniques, encore appelées "étiquettes radio", "étiquettes intelligentes", ou encore "smart cards", appellation anglo-saxonne équivalente à "étiquettes intelligentes", sont également bien connues de l'homme du métier sous l'acronyme anglo-saxon RFID (pour "Radio Frequency Identification") pour permettre une identification par fréquence radio.

De façon également connue, le procédé de l'invention comprend une étape fonctionnelle mettant au moins en oeuvre une opération de suivi.

En pratique, cette opération de suivi permet, pour chaque pneumatique, de garder une trace mémorisée des conditions d'utilisation de ce pneu, c'est-à-dire de certaines valeurs prises par un ou plusieurs paramètres physiques et évolutifs d'utilisation de ce pneu, tels que le kilométrage DIST de ce pneu, sa plus grande vitesse de roulage VMAX, sa pression minimale, etc.

Pour chaque pneu, l'opération de suivi consiste donc à constituer et / ou à mettre à jour un historique d'utilisation de ce pneu en mémorisant des valeurs actualisées de ce ou ces paramètres d'utilisation du pneu, ces valeurs étant en général recueillies par l'unité centrale UC en provenance de divers capteurs du véhicule VH, ou calculées par cette unité centrale au moyen de données liées à ces paramètres.

L'invention est mise en oeuvre au moyen de pneumatiques tels que 11 à 14 comportant chacun deux puces électroniques, chaque puce étant implantée dans un flanc correspondant du pneu.

Ainsi, les puces 21g et 21d sont respectivement implantées dans les flancs initialement gauche et droit du pneu 11, les puces 22g et 22d sont respectivement implantées dans les flancs gauche et droit du pneu 12, les puces 23g et 23d sont respectivement implantées dans les flancs gauche et droit du pneu 13, et les puces 24g et 24d sont respectivement implantées dans les flancs gauche et droit du pneu 14.

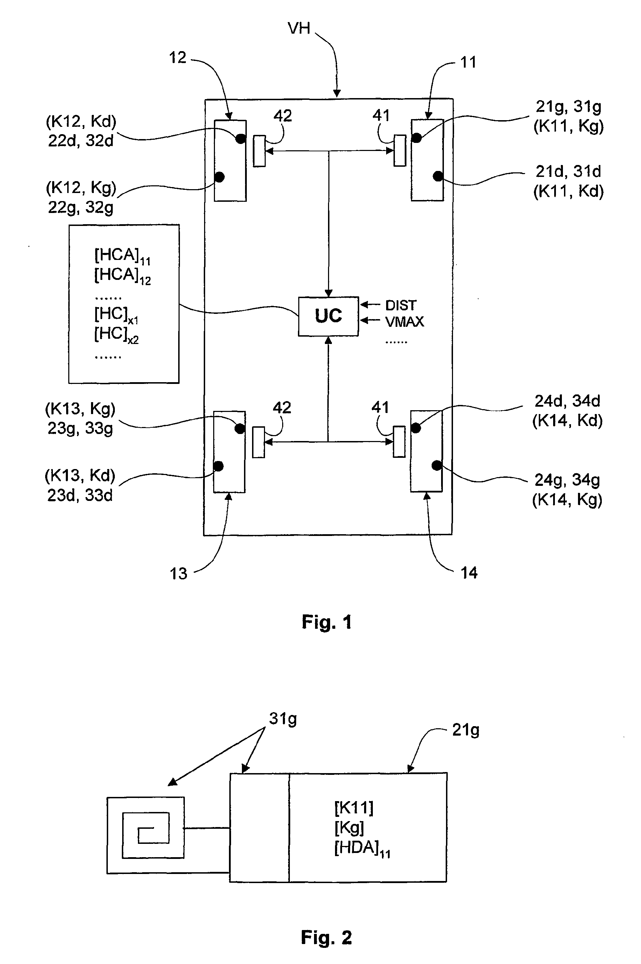

Cependant, compte tenu de ce que les circuits centraux de communication 41 à 44 sont localisés sur le véhicule, par exemple vers l'intérieur de ce dernier comme illustré à la figure 1, seules peuvent communiquer avec l'unité centrale UC les puces qui sont implantées dans les flancs internes des pneus 11 à 14, c'est-à-dire dont les circuits de communication respectifs sont situés dans la zone de portée des circuits centraux de communication.

En d'autres termes, seules les puces 21g, 22d, 23g, et 24d sont opérationnelles en fonctionnement dans la configuration illustrée à la figure 1.

Dans chacune des puces portées par un même pneu est mémorisé un code d'identification de ce pneu.

Par exemple, les puces 21g et 21d portées par le pneu 11 contiennent un code K11 d'identification du pneu 11, les puces 22g et 22d portées par le pneu 12 contiennent un code K12 d'identification du pneu 12, les puces 23g et 23d portées par le pneu 13 contiennent un code K13 d'identification du pneu 13, et les puces 24g et 24d portées par le pneu 14 contiennent un code K14 d'identification du pneu 14.

Par ailleurs, dans chaque puce est mémorisé un code d'implantation de cette puce dans le pneu qui la porte.

Ainsi, les puces 21g, 22g, 23g, et 24g, qui ont été implantées dans les flancs gauches respectifs des pneus 11 à 14, contiennent un code d'implantation Kg, alors que les puces 21d, 22d, 23d, et 24d, qui ont été implantées dans les flancs droits respectifs des pneus 11 à 14, contiennent un code d'implantation Kd.

Comme le montre l'examen de la figure 1, cet agencement permet de connaître et d'identifier totalement la façon dont chaque pneu est monté sur le véhicule VH.

Par exemple, il est possible de remarquer que le pneu 11 est monté de façon telle que sa puce opérationnelle 21 g est celle qui a été implantée dans son flanc gauche, alors que le pneu 14 est monté de façon telle que sa puce opérationnelle 24d est celle qui a été implantée dans son flanc droit, ce qui signifie que ce pneu a subi un retournement inversant ses flancs droit et gauche.

Dans ces conditions, l'étape fonctionnelle du procédé de l'invention comprend, pour chaque pneu, une opération centralisée de suivi, nommée MAJOURC, et une opération décentralisée de suivi, nommée MAJOURD.

L'opération centralisée de suivi MAJOURC consiste, pour chaque pneu, à constituer et / ou à mettre à jour dans l'unité centrale UC un historique centralisé actif HCA de l'utilisation de ce pneu, et l'opération décentralisée de suivi MAJOURD consiste à constituer et / ou à mettre à jour, dans la puce opérationnelle de ce pneu, un historique décentralisé actif HDA de l'utilisation de ce même pneu.

Cependant, comme la structure choisie permet de différencier les diverses situations de montage de chaque pneu, chaque historique centralisé actif HCA et l'historique décentralisé actif correspondant HDA sont simultanément dédiés au pneu identifié par le code d'identification de pneu mémorisé dans la puce opérationnelle dans laquelle l'historique HDA est tenu à jour, et à la situation de montage du pneu qui est identifiée par le code d'implantation mémorisé dans cette même puce opérationnelle.

Par exemple, l'historique centralisé actif [HCA]11 relatif au pneu 11 défini a priori comme équipant la roue avant droite, et l'historique décentralisé actif correspondant [HDA]11, sont simultanément dédiés au pneu 11 tel qu'identifié par le code d'identification K11 mémorisé dans la puce opérationnelle qui coopère avec le circuit central de communication avant droit 41, c'est-à-dire dans la puce 21g, et à la situation de montage du pneu qui est identifiée par le code d'implantation Kg mémorisé dans cette même puce opérationnelle 21g.

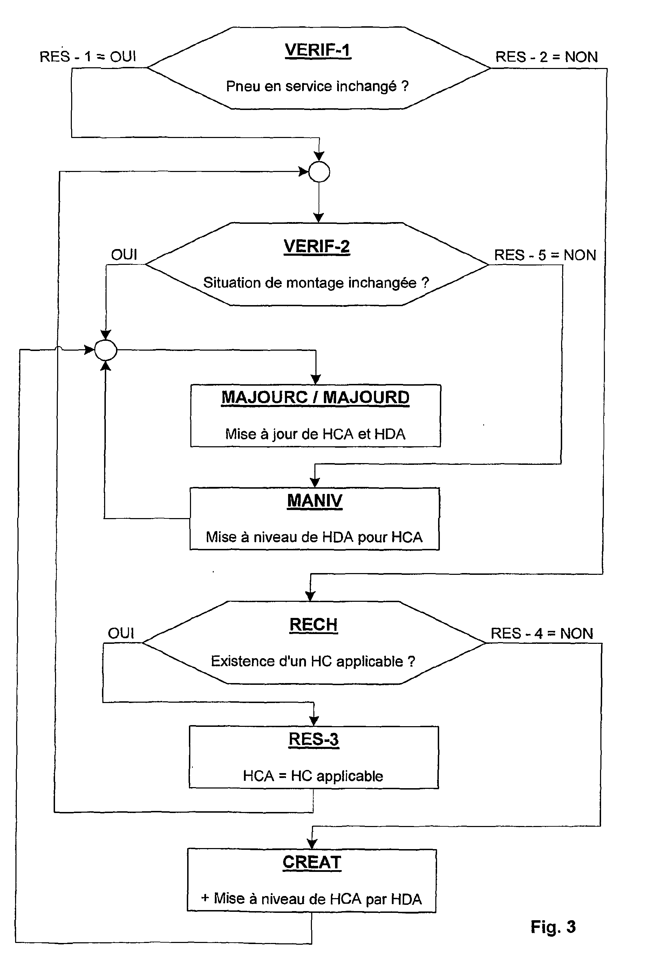

Le détail opérationnel du procédé est illustré à la figure 3 et sera exposé ci-après en référence au pneumatique 11 pris comme exemple.

Avant la mise en oeuvre des opérations centralisée et décentralisée de suivi MAJOURC et MAJOURD de ce pneu, ce procédé comprend une première opération de vérification VERIF_1 qui est par exemple déclenchée à chaque démarrage du véhicule VH et qui permet de vérifier que le pneumatique 11 n'a pas, pendant l'arrêt du véhicule, été déplacé de la roue avant droite pour être remonté sur une autre roue du véhicule, n'a pas été retourné sur lui-même par interversion de ses flancs droit et gauche en restant sur la roue avant droite, ou n'a pas été totalement démonté.

Cette opération VERIF_1 produit un premier résultat de décision RES_1 si l'historique centralisé actif HCA, tel qu'il existait avant l'arrêt du véhicule VH, est effectivement dédié, comme il se doit en l'absence de changement, au pneu tel qu'identifié par le code d'identification K11 mémorisé dans la puce opérationnelle 21g et transmis à l'unité centrale UC depuis le redémarrage du véhicule VH, c'est-à-dire au pneu 11, et un deuxième résultat de décision RES_2 dans le cas contraire.

La production du résultat RES_1 indique que le pneu 11, qui était sur la roue avant droite avant l'arrêt du véhicule, est toujours sur la roue avant droite, mais n'exclut pas la possibilité que ce pneu ait subi une interversion de ses flancs droit et gauche.

En revanche, la production du résultat RES_2 indique que le pneu 11, qui était sur la roue avant droite avant l'arrêt du véhicule, n'est plus sur la roue avant droite, mais n'exclut pas la possibilité que ce pneu ait été placé sur une autre roue, ni que le nouveau pneu n'ait pas déjà été utilisé antérieurement sur le véhicule et donc associé à un historique centralisé archivé, disponible dans la mémoire de l'unité centrale UC.

En cas de production du résultat RES_1, le procédé de l'invention effectue une deuxième opération de vérification VERIF_2 permettant de vérifier si le pneu 11, qui était sur la roue avant droite avant l'arrêt du véhicule et qui est toujours sur cette roue avant droite, a ou non subi une interversion de ses flancs droit et gauche.

Dans la mesure où une telle interversion s'accompagnerait nécessairement d'un changement de la puce opérationnelle de ce pneu, la deuxième opération de vérification VERIF_2 vérifie si l'historique centralisé actif HCA, tel qu'il existait avant l'arrêt du véhicule VH, est effectivement dédié, comme il se doit en l'absence de changement, à la situation de montage tel qu'identifiée par le code d'implantation Kg mémorisé dans la puce opérationnelle 21g et transmis à l'unité centrale UC depuis le redémarrage du véhicule VH.

Dans le cas contraire, l'opération de vérification VERIF_2 produit un cinquième résultat de décision RES_5, indiquant que le pneu 11, bien qu'étant toujours sur la roue avant droite, a subi une interversion de ses flancs droit et gauche pendant l'arrêt du véhicule.

En l'absence de tout changement, c'est-à-dire dans le cas où les opérations de vérification VERIF_1 et VERIF_2 n'ont produit aucun des résultats RES_2 et RES_5, les valeurs actualisées des paramètres d'utilisation du pneu 11, recueillies et / ou élaborées par l'unité centrale UC sont utilisées pour enrichir les historiques HCA et HDA.

Dans le cas où l'opération de vérification VERIF_2 a conduit au résultat de décision RES_5 indiquant que le pneu 11 a subi une inversion, le procédé met en oeuvre une opération de mise à niveau MANIV, au cours de laquelle tout enregistrement éventuellement manquant dans l'historique décentralisé actif HDA et disponible dans l'historique centralisé actif HCA dédié au même pneu est recopié de cet historique centralisé actif HCA vers l'historique décentralisé actif HDA.

Dans le cas où l'opération de vérification VERIF_1 a conduit au résultat de décision RES_2 indiquant que le pneu 11 monté sur la roue avant droite avant l'arrêt du véhicule a été remplacé par un autre pneu, le procédé met en oeuvre une opération de recherche RECH consistant à rechercher dans l'unité centrale UC un éventuel historique centralisé HC qui, bien que non actif, ait été préalablement mémorisé dans l'unité centrale UC et soit dédié au pneu identifié par le code d'identification mémorisé dans la nouvelle puce opérationnelle.

Au cas où cette recherche, effectuée parmi des historiques tels que [HC]x1, [HC]x2, etc. s'avère fructueuse, le procédé produit un troisième résultat de décision RES_3 qui consiste au moins à rendre actif cet historique centralisé HC mémorisé, relatif à un pneu déjà utilisé antérieurement sur le véhicule et nouvellement remis en service lors du dernier arrêt de ce véhicule.

En cas de recherche infructueuse, le procédé produit un quatrième résultat de décision RES_4 indiquant que le pneu nouvellement monté sur la roue avant droite est utilisé pour la première fois sur le véhicule.

Dans ce cas, le procédé de l'invention opère la création CREAT d'un nouvel historique centralisé actif HCA dédié au pneu identifié par le code d'identification de pneu mémorisé dans la nouvelle puce opérationnelle, et à la situation de montage identifiée par le code d'implantation, tel que Kg ou Kd, mémorisé dans cette même puce opérationnelle.

Si en outre le pneu nouvellement mis en service pour la première fois sur le véhicule lors du dernier arrêt de ce dernier n'est pas un pneu neuf, et si par conséquent ce pneu dispose déjà d'un historique décentralisé actif HDA, toute donnée disponible dans cet historique HDA et requise par l'historique centralisé actif HCA est recopiée de l'historique décentralisé HDA vers l'historique centralisé actif HCA nouvellement créé.

Le procédé de l'invention présente notamment le plus grand intérêt lorsqu'il est appliqué au suivi des conditions de roulage d'un pneumatique utilisé en mode dégradé, par exemple d'un pneumatique sous-gonflé ou même totalement dégonflé.

## Revendications

1. Procédé de surveillance d'un pneumatique (11 à 14) équipant un véhicule terrestre (VH) doté d'une unité centrale de contrôle (UC), ce procédé comprenant une étape préliminaire consistant au moins à implanter dans un flanc du pneumatique (11 à 14) une puce électronique (21g à 24g) dans laquelle est au moins mémorisé un code (K11 à K14) d'identification du pneu, et à équiper cette puce (21g à 24g) et l'unité centrale (UC) de circuits de communication respectivement périphérique (31g à 34g) et central (41 à 44) reliés l'un à l'autre à travers une voie de transmission de données exempte de contact physique, et une étape fonctionnelle comprenant au moins une opération de suivi consistant à constituer et / ou à mettre à jour un historique d'utilisation du pneu en mémorisant des valeurs actualisées centralisées par l'unité centrale (UC) et représentatives d'au moins un paramètre évolutif d'utilisation de ce pneu, tel que son kilométrage (DIST) ou sa plus grande vitesse de roulage (VMAX), **caractérisé en ce que** l'étape préliminaire consiste au moins à implanter dans des premier et second flancs du pneumatique (11 à 14) des première et seconde puces électroniques (21g à 24g, 21d à 24d) dont l'une seulement (21g, 22d, 23g, 24d) est opérationnelle en fonctionnement, dans chacune desquelles est mémorisé le même code d'identification du pneu (K11 à K14), et dans lesquelles sont respectivement mémorisés des codes respectifs différents d'implantation (Kg, Kd) de ces puces (21 g à 24g, 21d à 24d) dans le pneu, ces première et seconde puces (21g à 24g, 21d à 24d) étant respectivement dotées de premier et second circuits de communication périphériques (31g à 34g, 31d à 34d) dont seul le circuit de communication (31g, 32d, 33g, 34d) de la puce opérationnelle (21g, 22d, 23g, 24d) est utilisable en fonctionnement pour communiquer avec le circuit de communication central (41 à 44), et **en ce que** l'étape fonctionnelle comprend des opérations centralisée et décentralisée de suivi (MAJOURC, MAJOURD) consistant respectivement à constituer et / ou à mettre à jour, dans l'unité centrale (UC) et dans la puce opérationnelle (21g, 22d, 23g, 24d), des historiques centralisé et décentralisé actifs (HCA, HDA) simultanément dédiés au pneu identifié par le code d'identification (K11 à K14) mémorisé dans la puce opérationnelle (21g, 22d, 23g, 24d), et à une situation de montage du pneu identifiée par le code d'implantation (Kg, Kd, Kg, Kd) mémorisé dans cette puce opérationnelle (21 g, 22d, 23g, 24d).

2. Procédé de surveillance suivant la revendication 1, **caractérisé en ce que** l'étape fonctionnelle comporte, avant la mise en oeuvre des opérations centralisée et décentralisée de suivi (MAJOURC, MAJOURD), une première opération de vérification (VERIF_1) produisant un premier résultat de décision (RES_1) si l'historique centralisé actif (HCA) est dédié au pneu identifié par le code d'identification (K11 à K14) mémorisé dans la puce opérationnelle (21g, 22d, 23g, 24d), et un deuxième résultat de décision (RES_2) dans le cas contraire.

3. Procédé de surveillance suivant la revendication 2, **caractérisé en ce que** l'étape fonctionnelle comporte une opération de recherche (RECH) conditionnellement mise en oeuvre à la production du deuxième résultat de décision (RES_2), consistant à rechercher dans l'unité centrale (UC) un éventuel historique centralisé (HC) non actif préalablement mémorisé et dédié au pneu identifié par le code d'identification (K11 à K14) mémorisé dans la puce opérationnelle (21g, 22d, 23g, 24d), à produire, en cas de recherche fructueuse, un troisième résultat de décision (RES_3) consistant au moins à rendre actif cet historique centralisé (HC) mémorisé, et à produire un quatrième résultat de décision (RES_4) en cas de recherche infructueuse.

4. Procédé de surveillance suivant l'une quelconque des revendications précédentes, **caractérisé en ce que** l'étape fonctionnelle comporte, avant la mise en oeuvre des opérations centralisée et décentralisée de suivi (MAJOURC, MAJOURD), une deuxième opération de vérification (VERIF_2) produisant un cinquième résultat de décision (RES_5) si l'historique centralisé actif (HCA) est dédié au pneu identifié par le code d'identification (K11 à K14) mémorisé dans la puce opérationnelle (21g, 22d, 23g, 24d) sans être dédié à la situation de montage identifiée par le code d'implantation (Kg, Kd, Kg, Kd) mémorisé dans cette puce opérationnelle (21g, 22d, 23g, 24d).

5. Procédé de surveillance suivant la revendication 4, **caractérisé en ce que** l'étape fonctionnelle comporte une opération de mise à niveau (MANIV) conditionnellement mise en oeuvre à la production du cinquième résultat de décision (RES_5) et au cours de laquelle tout enregistrement éventuellement manquant dans l'historique décentralisé actif (HDA) et disponible dans l'historique centralisé actif (HCA) dédié au même pneu est recopié de cet historique centralisé actif (HCA) vers l'historique décentralisé actif (HDA).

6. Procédé de surveillance suivant l'une quelconque des revendications précédentes combinée à la revendication 3, **caractérisé en ce que** l'opération centralisée de suivi faisant suite à la production du quatrième résultat de décision (RES_4) comprend la création (CREAT) d'un nouvel historique centralisé actif (HCA) dédié au pneu identifié par le code d'identification (K11 à K14) de pneu mémorisé dans la puce opérationnelle (21g, 22d, 23g, 24d), et à la situation de montage identifiée par le code d'implantation (Kg, Kd, Kg, Kd) mémorisé dans cette puce opérationnelle, et **en ce que** tout enregistrement éventuellement manquant dans l'historique centralisé actif (HCA) nouvellement créé et disponible dans l'historique décentralisé actif (HDA) est recopié de cet historique décentralisé actif (HDA) vers l'historique centralisé actif (HCA) nouvellement créé.

7. Procédé de surveillance suivant l'une quelconque des revendications 2 et 4, **caractérisé en ce que** chaque opération de vérification est au moins effectuée à chaque démarrage du véhicule (VH).

8. Pneumatique pour la mise en oeuvre du procédé de surveillance suivant l'une quelconque des revendications précédentes, **caractérisé en ce qu'**il comprend au moins des première et seconde puces électroniques (21g, 21d) respectivement implantées dans les premier et second flancs de ce pneu (11).

9. Application du procédé de surveillance suivant l'une quelconque des revendications 1 à 7 au suivi des conditions de roulage d'un pneumatique utilisé en mode dégradé.

## Claims

1. Process for monitoring a tyre (11 to 14) fitted on a land vehicle (VH) provided with a central control unit (UC), the said process comprising a preliminary stage that consists at least in implanting in a sidewall of the tyre (11 to 14) an electronic chip (21 g to 24g) in which is memorised at least an identification code (K11 to K14) which identifies the tyre, and providing the said chip (21g to 24g) and the central unit (UC) with respectively peripheral (3 1 g to 34g) and central (41 to 44) communication circuits connected to one another via a data transmission path involving no physical contact, and a functional stage comprising at least a monitoring operation that consists in compiling and updating a historic record of the use of the tyre by memorising updated values centralised by the control unit (UC), such values representing at least one evolutive parameter of the use of the tyre such as the number of kilometres it has covered (DIST) or its highest running speed (VMAX), **characterised in that** the preliminary stage consists at least in implanting in first and second sidewalls of the tyre (11 to 14) respective first and second electronic chips (21 g to 24g, 21d to 24d) only one of which in each case (21g, 22d, 23g, 24d) is operational during use, in each of which is memorised the same tyre identification code (K11 to K14) and in which are respectively memorised different respective implantation codes (Kg, Kd) of the said chips (2 1 g to 24g, 21d to 24d) in the tyre, these first and second chips (21g to 24g, 21d to 24d) being respectively provided with first and second peripheral communication circuits (31g to 34g, 31d to 34d) of which only the communication circuit (31g, 32d, 33g, 34d) of the operational chip (21g, 22d, 23g, 24d) can be used during operation to communicate with the central communication circuit (41 to 44), and **in that** the functional stage comprises centralised and decentralised monitoring operations (MAJOURC, MAJOURD) that consist respectively in compiling and/or updating, in the central unit (UC) and in the operational chip (21g, 22d, 23g, 24d), active centralised and decentralised historical records (HCA, HDA) simultaneously dedicated to the tyre identified by the identification code (K11 to K14) memorised in the operational chip (21g, 22d, 23g, 24d) and to a mounting situation of the tyre identified by the implantation code (Kg, Kd, Kg, Kd) memorised in the said operational chip (21g, 22d, 23g, 24d).

2. Monitoring process according to Claim 1, **characterised in that** before the centralised and decentralised monitoring operations (MAJOURC, MAJOURD) are implemented, the functional stage comprises a first verification operation (VERIF_1) that generates a first decision result (RES_1) if the active centralised historical record (HAC) is dedicated to the tyre identified by the identification code (K11 to K14) memorised in the operational chip (21g, 22d, 23g, 24d), and a second decision result (RES_2) if it is not.

3. Monitoring process according to Claim 2, **characterised in that** the functional stage comprises a search operation (RECH) which is conditionally carried out if the second decision result (RES_2) is produced, and which consists in searching the central unit (UC) for any non-active historical record (HC) previously memorised and dedicated to the tyre identified by the identification code (K11 to K14) memorised in the operational chip (21g, 22d, 23g, 24d), and if this search proves fruitful, generating a third decision result (RES_3) that consists at least in activating the said memorised historical record (HC), or if the search proves unfruitful, generating a fourth decision result (RES_4).

4. Monitoring process according to any of the preceding claims, **characterised in that** before the centralised and decentralised monitoring operations (MAJOURC, MAJOURD) are implemented, the functional stage comprises a second verification operation (VERIF_2) which generates a fifth decision result (RES_5) if the active centralised historical record (HCA) is dedicated to the tyre identified by the identification code (K11 to K14) memorised in the operational chip (21 g, 22d, 23g, 24d) but is not dedicated to the mounting situation identified by the implantation code (Kg, Kd, Kg, Kd) memorised in the said operational chip (21g, 22d, 23g, 24d).

5. Monitoring process according to Claim 4, **characterised in that** the functional stage comprises a supplementing operation (MANIV) conditionally carried out if the fifth decision result (RES_5) has been generated, and during which any recorded element possibly missing from the active decentralised historical record (HDA) and available in the active centralised historical record (HCA) dedicated to the same tyre is recopied from the said active centralised record (HCA) into the said active decentralised record (HDA).

6. Monitoring process according to any of the preceding claims combined with Claim 3, **characterised in that** the centralised monitoring operation that follows the generation of the fourth decision result (RES_4) comprises the creation (CREAT) of a new active centralised historical record (HCA) dedicated to the tyre identified by the identification code (K11 to K14) memorised in the operational chip (21g, 22d, 23g, 24d), and to the mounting situation identified by the implantation code (Kg, Kd, Kg, Kd) memorised in the said operational chip, and **in that** any recorded element possibly missing from the newly created active centralised historical record (HCA) and available in the active decentralised historical record (HDA) is recopied from the said active decentralised record (HDA) into the newly created active centralised record (HCA).

7. Monitoring process according to either of Claims 2 and 4, **characterised in that** each verification operation is carried out at least each time the vehicle (VH) is started.

8. Tyre for implementing the monitoring process according to any of the preceding claims, **characterised in that** it comprises at least first and second electronic chips (21g, 21d) respectively implanted in first and second sidewalls of the tyre (11).

9. Application of the monitoring process according to any of Claims 1 to 7, to monitor the running conditions of a tyre used in a degraded mode.

## Patentansprüche

1. Verfahren zur Überwachung eines Luftreifens (11 bis 14), der ein Landfahrzeug (VH) bestückt, das mit einer zentralen Steuereinheit (UC) ausgestattet ist, wobei dieses Verfahren eine Vorstufe, die mindestens darin besteht, in eine Flanke des Luftreifens (11 bis 14) einen Chip (21g bis 24g) einzusetzen, in dem mindestens ein Identifikationscode (K11 bis K14) des Reifens gespeichert ist, und diesen Chip (21g bis 24g) und die Zentraleinheit (UC) mit peripheren (31g bis 34g) bzw, zentralen (41 bis 44) Verbindungsschaltungen auszustatten, die über einen Datenübertragungskanal ohne physikalischen Kontakt miteinander verbunden sind, und eine Betriebsstufe enthält, die mindestens einen Verfolgungsvorgang enthält, der darin besteht, einen Nutzungsverlauf des Reifens zu erstellen und/oder zu aktualisieren, indem aktualisierte, von der Zentraleinheit (UC) zentralisierte und für mindestens einen evolutiven Nutzungsparameter dieses Reifens repräsentative Werte, wie seine Fahrkilometer (DIST) oder seine größte Fahrgeschwindigkeit (VMAX), gespeichert werden, **dadurch gekennzeichnet, dass** die Vorstufe mindestens darin besteht, in erste und zweite Flanken des Luftreifens (11 bis 14) erste und zweite Chips (21g bis 24g, 21d bis 24d) einzubauen, von denen nur einer (21g, 22d, 23g, 24d) betriebsbereit ist, in jedem von denen der gleiche Identifikationscode des Reifens (K11 bis K14) gespeichert ist, und in denen jeweils unterschiedliche Einbaucodes (Kg, Kd) dieser Chips (21g bis 24g, 21d bis 24d) im Reifen gespeichert sind, wobei diese ersten und zweiten Chips (21g bis 24g, 21d bis 24d) je mit ersten und zweiten peripheren Verbindungsschaltungen (31g bis 34g, 31d bis 34d) versehen sind, von denen nur die Verbindungsschaltung (31g, 32d, 33g, 34d) des betriebsbereiten Chips (21g, 22d, 23g, 24d) im Betrieb verwendet werden kann, um mit der zentralen Verbindungsschaltung (41 bis 44) zu kommunizieren, und dass die Betriebsstufe eine zentralisierten und einen dezentralisierten Verfolgungsvorgang (MAJOURC, MAJOURD) enthält, die jeweils darin bestehen, in der Zentraleinheit (UC) und im betriebsbereiten Chip (21g, 22d, 23g, 24d) einen zentralisierten und einen dezentralisierten aktiven Verlauf (HCA, HDA) zu erstellen und/oder zu aktualisieren, die gleichzeitig dem durch den im betriebsbereiten Chip (21g, 22d, 23g, 24d) gespeicherten Identifikationscode (K11 bis K14) identifizierten Reifen und einer durch den in diesem betriebsbereiten Chip (21g, 22d, 23g, 24d) gespeicherten Einbaucode (Kg, Kd, Kg, Kd) identifizierten Montagesituation dediziert sind.

2. Überwachungsverfahren nach Anspruch 1, **dadurch gekennzeichnet, dass** die Betriebsstufe vor der Durchführung des zentralisierten und des dezentralisierten Verfolgungsvorgangs (MAJOURC, MAJOURD) einen ersten Prüfvorgang (VERIF_1) enthält, der ein erstes Entscheidungsergebnis (RES_1) erzeugt, wenn der aktive zentralisierte Verlauf (HCA) dem durch den im Chip (21g, 22d, 23g, 24d) gespeicherten Identifikationscode (K11 bis K14) identifizierten Reifen dediziert ist, und im gegenteiligen Fall ein zweites Entscheidungsergebnis (RES_2) erzeugt.

3. Überwachungsverfahren nach Anspruch 2, **dadurch gekennzeichnet, dass** die Betriebsstufe einen Suchvorgang (RECH) aufweist, der bei der Erzeugung des zweiten Entscheidungsergebnisses (RES_2) bedingt durchgeführt wird und darin besteht, in der Zentraleinheit (UC) einen möglichen vorher gespeicherten und dem durch den im betriebsbereiten Chip (21g, 22d, 23g, 24d) gespeicherten Identifikationscode (K11 bis K14) identifizierten Reifen dedizierten inaktiven zentralisierten Verlauf (HC) zu suchen, im Fall einer erfolgreichen Suche ein drittes Entscheidungsergebnis (RES_3) zu erzeugen, das mindestens darin besteht, diesen gespeicherten zentralisierten Verlauf (HC) zu aktivieren, und im Fall einer erfolglosen Suche ein viertes Entscheidungsergebnis (RES_4) zu erzeugen.

4. Überwachungsverfahren nach einem der vorhergehenden Ansprüche, **dadurch gekennzeichnet, dass** die Betriebsstufe vor der Durchführung des zentralisierten und des dezentralisierten Verfolgungsvorgangs (MAJOURC, MAJOURD) einen zweiten Prüfvorgang (VERIF_2) aufweist, der ein fünftes Entscheidungsergebnis (RES_5) erzeugt, wenn der aktive zentralisierte Verlauf (HCA) dem durch den im betriebsbereiten Chip (21g, 22d, 23g, 24d) gespeicherten Identifikationscode (K11 bis K14) identifizierten Reifen dediziert ist, ohne der durch den in diesem betriebsbereiten Chip (21g, 22d, 23g, 24d) gespeicherten Einbaucode (Kg, Kd, Kg, Kd) identifizierten Montagesituation dediziert zu sein.

5. Überwachungsverfahren nach Anspruch 4, **dadurch gekennzeichnet, dass** die Betriebsstufe einen Auffrischungsvorgang (MANIV) aufweist, der bedingt bei der Erzeugung des fünften Entscheidungsergebnisses (RES_5) durchgeführt wird und während dem jede ggf. im aktiven dezentralisierten Verlauf (HDA) fehlende und im aktiven zentralisierten Verlauf (HCA) verfügbare Eintragung, die dem gleichen Reifen dediziert ist, von diesem aktiven zentralisierten Verlauf (HCA) in den aktiven dezentralisierten Verlauf (HDA) kopiert wird.

6. Überwachungsverfahren nach einem der vorhergehenden Ansprüche kombiniert mit Anspruch 3, **dadurch gekennzeichnet, dass** der zentralisierte Verfolgungsvorgang nach der Erzeugung des vierten Entscheidungsergebnisses (RES_4) die Erzeugung (CREAT) eines neuen aktiven zentralisierten Verlaufs (HCA) enthält, der dem durch den im betriebsbereiten Chip (21g, 22d, 23g, 24d) gespeicherten Reifenidentifikationscode (K11 bis K14) identifizierten Reifen und der durch den in diesem betriebsbereiten Chip gespeicherten Einbaucode (Kg, Kd, Kg, Kd) identifizierten Montagesituation dediziert ist, und dass jede möglicherweise im neu erzeugten aktiven zentralisierten Verlauf (HCA) fehlende und im aktiven dezentralisierten Verlauf (HDA) verfügbare Eintragung von diesem aktiven dezentralisierten Verlauf (HDA) in den neu erzeugten aktiven zentralisierten Verlauf (HCA) kopiert wird.

7. Überwachungsverfahren nach einem der Ansprüche 2 und 4, **dadurch gekennzeichnet, dass** jeder Prüfvorgang mindestens bei jedem Start des Fahrzeugs (VH) ausgeführt wird.

8. Luftreifen zur Durchführung des Überwachungsverfahrens nach einem der vorhergehenden Ansprüche, **dadurch gekennzeichnet, dass** er mindestens einen ersten und einen zweiten Chip (21g, 21d) aufweist, die in die erste bzw. zweite Flanke dieses Reifens (11) eingebaut sind.

9. Anwendung des Überwachungsverfahrens nach einem der Ansprüche 1 bis 7 auf die Verfolgung der Fahrbedingungen eines im Notlauf verwendeten Luftreifens.
